(19) Europäisches Patentamt
European Patent Office
Office européen des brevets

(11) **EP 1 757 365 A1**

(12) **EUROPEAN PATENT APPLICATION**
published in accordance with Art. 158(3) EPC

(43) Date of publication:
**28.02.2007 Bulletin 2007/09**

(51) Int Cl.:
***B01J 35/02*** *(2006.01)*  ***B32B 9/00*** *(2006.01)*
***C09D 1/00*** *(2006.01)*

(21) Application number: **05734431.9**

(22) Date of filing: **19.04.2005**

(86) International application number:
**PCT/JP2005/007451**

(87) International publication number:
**WO 2005/102521 (03.11.2005 Gazette 2005/44)**

(84) Designated Contracting States:
**AT BE BG CH CY CZ DE DK EE ES FI FR GB GR HU IE IS IT LI LT LU MC NL PL PT RO SE SI SK TR**

(30) Priority: **20.04.2004 JP 2004124260**
**02.08.2004 JP 2004225898**

(71) Applicants:
• **SUMITOMO METAL INDUSTRIES, LTD.**
**Osaka-shi,**
**Osaka 541-0041 (JP)**
• **Sumitomo Titanium Corporation**
**Amagasaki-shi,**
**Hyogo 660-8533 (JP)**

(72) Inventors:
• **NISHIHARA, K.,**
**SUMITOMO METAL INDUSTRIES, LTD.**
**Osaka-shi,**
**Osaka 5410041 (JP)**
• **MASAKI, Yasuhiro,**
**SUMITOMO METAL INDUSTRIES, LTD.**
**Osaka-shi Osaka 5410041 (JP)**
• **FUKUDA, Tadashi,**
**SUMITOMO METAL INDUSTRIES, LTD.**
**Osaka-shi, Osaka 5410041 (JP)**

• **OKADA, Katsumi,**
**SUMITOMO METAL INDUSTRIES, LTD.**
**Osaka-shi, Osaka 5410041 (JP)**
• **SHIMOSAKI, Shinji,**
**SUMITOMO TITANIUM CORPORATION**
**Amagasaki-shi, Hyogo 6608533 (JP)**
• **NAGAOKA, Sadanobu,**
**SUMITOMO TITANIUM CORPORATION**
**Amagasaki-shi, Hyogo 6608533 (JP)**
• **KANNO, Hideaki,**
**SUMITOMO TITANIUM CORPORATION**
**Amagasaki-shi, Hyogo 6608533 (JP)**
• **AZUMA, Kazuomi,**
**SUMITOMO TITANIUM CORPORATION**
**Amagasaki-shi, Hyogo 6608533 (JP)**
• **OGASAWARA, Tadashi,**
**SUMITOMO TITANIUM CORPORATION**
**Amagasaki-shi, Hyogo 6608533 (JP)**

(74) Representative: **Schrimpf, Robert et al**
**Cabinet Regimbeau**
**20, rue de Chazelles**
**75847 Paris cedex 17 (FR)**

(54) **TITANIUM OXIDE BASE PHOTOCATALYST, PROCESS FOR PRODUCING THE SAME AND USE THEREOF**

(57) A highly active titanium oxide photocatalyst of the type responsive to visible light is prepared by subjecting a titanium (hydr)oxide raw material obtained by neutralizing an acidic titanium compound in ammonia or an amine under conditions such that the final pH is 7 or below to heat treatment in an atmosphere containing a hydrolyzable compound followed by contact with water and additional heat treatment at a temperature of at least 350° C. The resulting titanium oxide photocatalyst comprises titanium oxide with a specific surface area of at most 120 $m^2/g$ and with the amount of surface hydroxyl groups being at least 600 $\mu$eq/g. Preferably the density of surface hydroxyl groups is at least 8 $\mu$eq/$m^2$, and the ratio of the amount of terminal type hydroxyl groups (T) to the amount of bridge type hydroxyl groups (B) in the surface hydroxyl groups satisfies T/B $\geq$ 0.20. This titanium oxide photocatalyst has an ESR spectrum having two types of triplet signal for which the g values of the main spectra are 1.993 - 2.003 and 2.003 - 2.011, respectively, and it is also identified by having ratios of the strengths of these signals before irradiation with visible light, under irradiation, and immediately after the stop of irradiation which are different from conventional products.

EP 1 757 365 A1

# Fig. 1

**Description**

Technical Field

This invention relates to a highly active, visible light-responsive photocatalyst of titanium oxide which can exhibit its photocatalytic activity in response to irradiation by not only ultraviolet light but also visible light and to a method for its preparation. The present invention also relates to a photocatalytic functional member of the type responsive to visible light which utilizes the photocatalyst and to a dispersion and coating fluid containing the photocatalyst.

Background Art

In recent years, the photocatalytic effect exhibited by titanium oxide has been utilized in a wide variety of environmental cleaning techniques for deodorizing, antibacterial, antifouling and similar purposes. Titanium oxide of anatase form which is a typical form for a photocatalyst has a band gap of approximately 3.2 eV. When irradiated with ultraviolet light having a wave length shorter than approximately 380 nm, it functions as a photocatalyst to promote reactions such as decomposition of organic substances. Accordingly, irradiation with ultraviolet light is necessary in order for this type of a photocatalyst to exhibit its photocatalytic activity, and this fact creates the problem that it limits its environment of installation and its uses.

If visible light present in abundance in sunlight or room light can be used as an energy source for a photocatalyst, the reactivity of the photocatalyst is strengthened, and it becomes possible to utilize the photocatalyst in various locations. Therefore, development of a visible light-responsive photocatalytic material which can exhibit photocatalytic activity in response to visible light is being pursued.

For example, JP H9-262482-A discloses a titanium oxide photocatalyst which has activity in response to visible light and which is characterized by ion implantation of vanadium or chromium. The Journal of the Japan Chemical Society, 8, p. 1084 - 1090 (1986), JP H10-146530-A, and other publications disclose that titanium oxide having oxygen defects exhibits photocatalytic activity in response to visible light. In this regard, WO 00/10706 reports a titanium oxide photocatalyst which can exhibit activity in response to visible light by imparting stable oxygen defects to titanium oxide. In addition, JP 2001-2015103-A discloses a photocatalyst which is given photocatalytic activity in response to visible light by containing nitrogen in titanium oxide crystals. WO 03/080244 reports a titanium oxide photocatalyst responsive to visible light which contains a metal compound such as a metal halide, a metal oxide, or a metal hydroxide.

Disclosure of the Invention

Introducing metal ions or oxygen defects into titanium oxide is effective for making a titanium oxide photocatalyst responsive to visible light. However, metal ions or oxygen defects may act as starting points for deactivation of a photocatalytic reaction accompanying dissociation of electrons and positive holes, and thus they sometimes worsen the expression of photocatalytic activity or reduce the photocatalytic activity itself.

In addition, with titanium oxide which contains a metal halide or metal hydroxide, since the temperature at which heat treatment is performed thereon during its preparation is relatively low, it has a large specific surface area, and its crystallinity is not so high. Therefore, although such titanium oxide can effectively adsorb substances to be decomposed, it has the problem that its ability to decompose substances is inadequate. In particular, when it is used for antifouling purposes, due to its high adsorbability, dirt easily adheres to the photocatalyst. It requires a considerable length of time to decompose the adhered dirt, depending on the irradiation conditions, and this fact may lead to a decrease in antifouling ability of the catalyst.

The present invention is intended to provide a titanium oxide photocatalyst which can stably exhibit a high photocatalytic activity in response to visible light, a method for its preparation which is suitable for mass production, a functional member having this photocatalyst on the surface of a substrate, and a coating fluid.

As stated earlier, a photocatalyst responsive to visible light (visible light-responsive photocatalyst) contains oxygen defects or metal ions. Therefore, electrons and positive holes (referred to as carriers) which have once separated can easily recombine through the defects or ions, creating a tendency for the photocatalytic activity to decrease. It is thought that if electrons and/or positive holes can be rapidly transported immediately after separation of electric charges to the surface where a chemical reaction takes place, recombination of electric charges is suppressed and the overall photocatalytic reaction is promoted.

As a result of investigations based on this concept, the present inventors discovered that if crystal growth of titanium oxide progresses such that it has a specific surface area as small as at most 120 $m^2/g$ and if the amount of hydroxyl groups (OH groups) on its surface is increased to at least 600 $\mu eq/g$ (eq = equivalent), it exhibits a high photocatalytic activity in response to visible light, and they achieved the present invention.

The present invention is a titanium oxide photocatalyst which exhibits photocatalytic activity when irradiated with visible light, characterized by comprising titanium oxide which has a specific surface area of at most 120 $m^2/g$ and for which the amount of surface hydroxyl groups as measured by the fluoride ion adsorption method is at least 600 $\mu eq/g$.

A titanium oxide photocatalyst according to the present invention is of the type responsive to visible light which exhibits photocatalytic activity when irradiated by visible light. Visible light is generally light with a wavelength of at least 400 nm. A titanium oxide photocatalyst according to the present invention exhibits photocatalytic activity in response to not only visible light but also to ultraviolet rays with a wavelength of at most 400 nm as with a conventional titanium oxide photocatalyst.

When titanium oxide undergoes heat treatment, its specific surface area generally decreases, but at the same time the crystallinity of titanium oxide itself increases, and the efficiency of electric charge separation increases. As the specific surface area of titanium oxide increases, its catalytic activity generally increases since it can adsorb reactive substances more easily. However, when it is desired to decompose dirt, particularly under conditions where the amount of irradiated light is small, the rate of decomposition of dirt decreases so that fouling ends up becoming more prominent. By subjecting titanium oxide to heat treatment such that its specific surface area decreases to at most 120 $m^2/g$, its crystallinity increases and its specific surface area is in a suitable range so that a well-balanced photocatalytic action can be utilized. As a result, when it is used for antifouling purposes, dirt becomes less prominent.

In a titanium oxide catalyst according to the present invention, the amount of surface hydroxyl groups present on the titanium oxide is at least 600 $\mu eq/g$. The density of hydroxyl groups per unit area ($m^2$) of the surface hydroxyl groups is preferably at least 8 $\mu eq/m^2$. Hydroxyl groups present on the surface of titanium oxide capture carriers which are formed inside the titanium oxide and at the same time function as catalytically active sites. On a reaction surface of a photocatalyst having a limited specific surface area, increasing the amount of hydroxyl groups and preferably increasing the density of hydroxyl groups makes it possible to efficiently capture carriers which are formed by charge separation. Occurrence of a photocatalytic reaction at the same sites where this capturing occurs or at sites which are extremely close thereto can promote the reaction with certainty, thereby enhancing the photocatalytic activity.

If the specific surface area of titanium oxide is greater than 120 $m^2/g$ or the amount of surface hydroxyl groups thereon is less than 600 $\mu eq/g$, a highly active visible light-responsive photocatalyst is not produced.

Measurement of the specific surface area of titanium oxide can be carried out using the well-known BET method employing adsorption of nitrogen.

Measurement of hydroxyl groups on the surface of titanium oxide can be carried out by the fluoride ion adsorption method (see, for example, H. P. Boehm, Angew. Chem., 78, 617 (1966)). In this method, as described in detail in the examples, a sample of titanium oxide is added to a buffered solution containing a fixed amount of fluoride ions, and utilizing replacement of the hydroxyl groups on the surface of the sample by fluoride ions, the amount of surface hydroxyl groups is determined from the amount of fluoride ions which are consumed for replacement. Instead of this method, it is possible to also utilize spectroscopic measurement such as the FT-IR method, but the fluoride ion adsorption method is preferred in light of factors such as ease of use and reproducibility. The amount of hydroxyl groups on the surface of titanium oxide in the present invention is the value obtained by the fluoride ion adsorption method.

The density of hydroxyl groups ($\mu eq/m^2$) on the surface of titanium oxide is calculated from the amount of surface hydroxyl groups ($\mu eq/g$) and the specific surface area ($m^2/g$) obtained by the above-described methods.

Hydroxyl groups existing on the surface of titanium oxide are classified into two types, i.e., terminal type and bridge type. The terminal type is a hydroxyl group bonded to one $Ti^{4+}$ ion, and the bridge type is a hydroxyl group bonded to two $Ti^{4+}$ ions. Terminal type hydroxyl groups have the property of dissociating as $OH^-$ and behave as a base, and thus they easily combine with acid anions. On the other hand, bridge type hydroxyl groups are strongly polarized by the Ti cations with the O-H bonds being loosened, and they act as an acid and react with amines in a vapor phase.

In a preferred embodiment of the present invention, the ratio of the amount of terminal type hydroxyl groups (T, $\mu eq/g$) to the amount of bridge type hydroxyl groups (B, $\mu eq/g$) satisfies $T/B \geq 0.20$. Such titanium oxide has further improved catalytic activity in response to visible light, and its dispersibility in fluids is also improved.

Although the reason for this phenomenon has not yet been ascertained, it is known that heat treatment causes terminal type hydroxyl groups which are thermally less stable to disappear easily, with bridge type hydroxyl groups which are thermally more stable and act as acidic sites largely remaining on the catalyst surface. With a photocatalyst according to the present invention, it is thought that a relatively large amount of terminal type hydroxyl groups which act as basic sites remains on the surface of titanium oxide, thereby increasing the variety of catalytically active sites and promoting the decomposition of intermediate products, and thus the overall catalytic activity is increased.

Both terminal type and bridge type hydroxyl groups on the surface of titanium oxide can be replaced by fluoride ions in the above-mentioned fluoride ion adsorption method using a buffer solution as a reaction medium. Accordingly, in this method, the total amount of surface hydroxyl groups is determined. However, if measurement is carried out in the same manner but using a non-buffer solution instead of a buffer solution as a medium of fluoride ions, only terminal type hydroxyl groups are replaced by fluoride ions, so it becomes possible to determine the amount of terminal type surface hydroxyl groups. The amount of bridge type hydroxyl groups can be determined by subtracting the amount of terminal type surface hydroxyl groups from the total amount of surface hydroxyl groups.

In order for titanium oxide to have an increased response to visible light, it is preferable for the titanium oxide to contain oxygen defects.

A titanium oxide photocatalyst according to the present invention comprising titanium oxide having surface hydroxyl groups in an amount of at least 600 $\mu$eq/g and a specific surface area of at most 120 m$^2$/g can be prepared by a method including subjecting a raw material selected from titanium oxide and its precursors to heat treatment in an atmosphere containing a hydrolyzable compound, then bringing the raw material into contact with water, and then subjecting it to heat treatment at a temperature of at least 350° C. A preferred raw material for use in this method is titanium oxide and/or titanium hydroxide prepared by a method including neutralizing an acidic titanium compound with a nitrogen-containing base under such conditions that the pH at the completion of the reaction is 7 or lower. The material which is obtained as a precipitate in this method is titanium hydroxide, but if it is then dried, depending upon the drying temperature, at least a portion thereof may become titanium oxide. Accordingly, the raw material may be one or both of titanium oxide and titanium hydroxide.

When the ESR (electron spin resonance) spectrum of a titanium oxide photocatalyst having oxygen defects which was prepared by the above-described method was measured at a temperature of 5 K or below, as next described, it was found that a new ESR spectrum attributed to oxygen defects was produced. Thus, a titanium oxide photocatalyst of the type responsive to visible light according to the present invention can be specified by the below-described ESR spectrum.

(1) In an ESR spectrum measured at a temperature of 5 K or below before irradiation with visible light, first triplet signal consisting of a main signal having a g value in the range of 1.993 - 2.003 and two auxiliary signals having g values in the ranges of 1.976 - 1.982 and 2.010 - 2.020, respectively, are observed (this triplet signal being referred to herein as triplet signal A). At the same time, in this ESR spectrum, second triplet signal consisting of a main signal having a g value in the range of 2.003 - 2.011 and two auxiliary signals having g values in the ranges of 1.982 - 1.988 and 2.018 - 2.028, respectively, are also observed (referred to as triplet signal B). Namely, the titanium oxide exhibits the characteristic of having two types of oxygen defects which can be identified by triplet signal A and triplet signal B, respectively. Another characteristic is that in this ESR spectrum, the strength of the main signal of triplet signal A is greater than the strength of the main signal of triplet signal B. In a conventional product, the main signal of triplet signal B is stronger.

(2) In an ESR spectrum measured at a temperature of 5 K or below during irradiation with visible light, the strength of each of the main signal and the two auxiliary signals of triplet signal A is smaller than the strength before irradiation with visible light, or the signal is not observed. On the other hand, the strength of each of the main signal and the two auxiliary signals of triplet signal B in this ESR spectrum is higher than the strength before irradiation with visible light.

(3) For ESR spectra measured in air at a temperature of 5 K or below before and during irradiation with visible light, the ratio ($Ia_1/Ia_0$) of the strength $Ia_1$ of the main signal of triplet signal A during irradiation to the strength $Ia_0$ thereof before irradiation is smaller than 0.4. On the other, the ratio ($Ib_1/1b_0$) of the strength $Ib_1$ of the main signal of triplet signal B during irradiation to the strength $Ib_0$ thereof before irradiation is greater than 3.

(4) In an ESR spectrum measured during irradiation with visible light at a temperature of 5 K or below, the strength of the main signal of triplet signal B is greater than the strength of the main signal of triplet signal A.

(5) In an ESR spectrum measured immediately after the stop of irradiation with visible light at a temperature of 5 K or below, the strength of each of the main signal and the two auxiliary signals of triplet signal A is greater than the strength measured during irradiation with visible light. On the other hand, the strength of each of the main signal and the auxiliary signals of triplet signal B of this ESR spectrum is smaller than the strength measured during irradiation with visible light.

(6) For ESR spectra measured in air at a temperature of 5 K or below immediately after the stop of irradiation and before irradiation with visible light, the ratio ($Ia_2/Ia_0$) of the strength $Ia_2$ of the main signal of triplet signal A immediately after the stop of irradiation to the strength $Ia_0$ thereof before irradiation is greater than 0.3. For ESR spectra measured *in vacuo* at a temperature of 5 K or below immediately after the stop of irradiation and before irradiation with visible light, the ratio ($Ic_2/Ic_0$) of the strength $Ic_2$ of the main signal of triplet signal A immediately after the stop of irradiation to the strength $Ic_0$ thereof before irradiation is greater than 0.4. In addition, the ratio $Ic_2/Ic_0$ *in vacuo* is greater than the ratio $Ia_2/Ia_0$ in air.

(7) For ESR spectra measured in air at a temperature of 5 K or below immediately after the stop of irradiation and during irradiation with visible light, the ratio ($Ib_2/Ib_1$) of the strength $Ib_2$ of the main signal of triplet signal B immediately after the stop of irradiation to the strength $Ib_1$ thereof during irradiation is smaller than 0.4. For ESR spectra measured *in vacuo* at a temperature of 5 K or below immediately after the stop of irradiation and during irradiation with visible light, the ratio ($Id_2/Id_1$) of the strength $Id_2$ of the main signal of triplet signal B immediately after the stop of irradiation to the strength $Id_1$ thereof during irradiation is smaller than 0.45.

(8) The main signal of triplet signal A of the ESR spectrum measured at a temperature of 5 K or below comprises at least two signals having g values in the ranges of 1.993 - 2.000 and 1.998 - 2.003, respectively.

(9) The main signal of triplet signal B of the ESR spectrum measured at a temperature of 5 K or below comprises at least four signals having g values in the ranges of 2.003 - 2.0045, 2.004 - 2.006, 2.0065 - 2.0085, and 2.009 - 2.011, respectively.

The crystal form of the titanium oxide preferably comprises one or both of anatase and rutile forms.

A method for preparing a titanium oxide-based, visible light-responsive photocatalyst according to the present invention is not limited to the above-described method. Other preparation methods can be used if they can form titanium oxide having the above-described specific surface area and amount of surface hydroxyl groups or titanium oxide having oxygen defects which give an ESR spectrum specified by at least one of above-described characteristics (1) - (9).

A titanium oxide-type, visible light-responsive photocatalyst according to the present invention can be utilized in various forms such as powders, films (including thin films), liquids, or fibers. In particular, a form in which this photocatalyst is adhered to the surface of a substrate and fixed thereon can be utilized as a photocatalytic functional member having a photocatalytic activity.

A preferred photocatalytic functional member has a coating film containing the above-described titanium oxide photocatalyst in a binder component on the surface of a substrate, with the content of the titanium oxide photocatalyst in the film being in the range of 5 - 95 mass percent.

The present invention also provides a photocatalyst dispersion and a coating fluid which can be used to prepare this type of functional member.

A photocatalytic functional member of the type responsive to visible light according to the present invention can be prepared by a method including applying the above-described coating fluid to the surface of a substrate. As another method, a photocatalytic functional member of the type responsive to visible light according to the present invention can be prepared by a method characterized by adhering a raw material selected from titanium oxide and its precursors to the surface of a heat resistant substrate, then subjecting the substrate to heat treatment in an atmosphere containing a hydrolyzable compound, contacting it with water, and then subjecting it to heat treatment at a temperature of at least 350° C. It is also possible for the above-described raw material to be adhered to the surface of a heat resistant substrate after it has been subjected to heat treatment in an atmosphere containing a hydrolyzable compound and then brought into contact with water so that only the final heat treatment at a temperature of at least 350° C of the raw material is carried out on the substrate surface.

According to the present invention, a highly active titanium oxide photocatalyst and a photocatalytic functional member of the type responsive to visible light which stably exhibit a high photocatalytic activity when irradiated with visible light can be prepared by a method suitable for mass production and can be provided relatively inexpensively.

Brief Description of the Drawings

Figure 1 shows ESR spectra of a titanium oxide photocatalyst according to the present invention measured in air at a temperature of 5 K or below before irradiation with visible light, immediately after the start of irradiation, and immediately after the stop of irradiation.

Figure 2 shows similar ESR spectra of a commercially available visible light-responsive titanium oxide photocatalyst.

Figure 3 is a graph showing the results of a hydrophilicity test in examples and comparative examples.

Best Mode for Carrying Out the Invention

In one aspect, a visible light-responsive titanium oxide photocatalyst according to the present invention has surface hydroxyl groups in an amount of at least 600 $\mu$eq/g and a specific surface area of at most 120 $m^2$/g. Preferably, the density of hydroxyl groups on the surface is at least 8 $\mu$eq/$m^2$, and the ratio of the amount of terminal type hydroxyl groups (T, $\mu$eq/g) to the amount of bridge type hydroxyl groups (B, $\mu$eq/g) satisfies the relationship T/B $\geq$ 0.20.

The amount of surface hydroxyl groups is preferably at least 650 $\mu$eq/g and more preferably at least 700 $\mu$eq/g. The specific surface area is preferably at most 100 $m^2$/g and more preferably at most 80 $m^2$/g. The lower limit on the specific surface area is preferably 40 $m^2$/g. The density of hydroxyl groups is more preferably at least 10 $\mu$eq/$m^2$, and the T/B ratio is more preferably at least 0.25.

The structure of a titanium oxide photocatalyst according to the present invention may be crystalline or amorphous, or it may be a mixture of both. When it is at least partly crystalline, possible crystal forms include anatase, rutile, and brookite. It may comprise any one of these, or two or more of these may be mixed together. In order to obtain the highest photocatalytic activity in response to visible light, the titanium oxide is preferably crystalline, and its structure is preferably anatase and/or rutile.

As long as it has the above-described amount of surface hydroxyl groups and specific surface area, titanium oxide constituting a photocatalyst according to the present invention may be any of oxygen defective titanium oxide, titanium oxide containing lower-valent titanium ions, nitrogen-containing titanium oxide, rutile-form titanium oxide, or titanium oxide which is a mixture of these. Preferred as a visible light-responsive type are oxygen defective titanium oxide and nitrogen-containing titanium oxide, and titanium oxide having oxygen defects is particularly preferred. Of course, titanium oxide having the characteristics of both the oxygen defective type and the nitrogen-containing type may be used. The presence or absence of oxygen defects can be ascertained by ESR, for example.

When a titanium oxide photocatalyst is made up from titanium oxide having oxygen defects, possible oxygen defects are the following three types which are identified by the change in the ESR spectrum and the g values of signals measured at a temperature of 5 K or below immediately before irradiation with visible light, one minute after the start of irradiation with visible light, and immediately after the stop of irradiation with visible light.

(a) An oxygen defect characterized by releasing electrons when irradiated with visible light and again capturing electrons when irradiation with visible light is stopped. An ESR signal assigned to electrons captured by this type of oxygen defect is identified by a triplet (triplet signal A) consisting of a main signal with a g value in the range of 1.993 - 2.003 and two auxiliary signals with g values in the ranges of 1.976 - 1.982 and 2.010 - 2.020, respectively. The strength of this triplet signal decreases or disappears by irradiation with visible light, and conversely it increases or appears when irradiation with visible light is stopped. This type of oxygen defect serves to increase the efficiency of generation of electrons and positive holes caused by irradiation with visible light and thus to strengthen the photocatalytic activity.

(b) An oxygen defect characterized by capturing electrons when irradiated with visible light and again releasing electrons when irradiation with visible light is stopped. An ESR signals assigned to electrons captured by this type of oxygen defect is identified by a triplet (triplet signal B) consisting of a main signal having a g value in the range of 2.003 - 2.011 and two auxiliary signals having g values in the ranges of 1.982 - 1.988 and 2.018 - 2.028, respectively. The strength of this triplet signal increases or appears by irradiation with visible light, and it decreases or disappears when irradiation with visible light is stopped. This type of oxygen defect serves to increase the efficiency of generation of active radical species caused by electrons and positive holes formed by irradiation with visible light and thus to strengthen the photocatalytic activity.

(c) An oxygen defect characterized by capturing electrons when irradiated with visible light but not releasing electrons when irradiation with visible light is stopped. An ESR signal assigned to electrons captured by this type of oxygen defect is identified by a triplet (triplet signal B) having the same g values as (b). The strength of this triplet signal increases or appears by irradiation with visible light, but it does not readily decrease or disappear when irradiation with visible light is stopped. This type of oxygen defect decreases the efficiency of generation of active radical species caused by electrons and positive holes formed by irradiation with visible light and thus impedes the photocatalytic activity.

Therefore, in order to increase the photocatalytic activity of titanium oxide in response to visible light which is attributable to oxygen defects, it is advantageous for the titanium oxide to contain a large amount of the above-described oxygen defects of types (a) and (b) and few oxygen defects of type (c). As shown in detail in the examples, the ratio of these three types of oxygen defects can be characterized by the change in strength of the main signals and auxiliary signals of triplet signals A and B of ESR spectra measured in air and *in vacuo* at a temperature of 5 K or below before, during, and after irradiation with visible light.

A titanium oxide photocatalyst according to the present invention exhibits the changes in strength of triplet signals A and B identified by above-described characteristics (1) - (9). These changes in strength of signals indicate that this titanium oxide photocatalyst has a large amount of oxygen defects of above-described types (a) and (b) and a small amount of oxygen defects of above-described type (c). The result is that the oxygen defects can adequately increase the efficiency of generation of active radical species formed by irradiation with visible light and produce a high photocatalytic activity in response to visible light.

It is thought that above-described types (a) and (b) are oxygen defects which exist in a crystalline phase located on or near the surface of titanium oxide and that type (c) is an oxygen defect which is present in an amorphous phase or a crystalline phase in the inside. If the surface and the vicinity of the surface of a titanium oxide photocatalyst are formed from crystal phases and almost all the oxygen defects are present in these crystal phases near the surface, it is thought that the formation of electrons and positive holes caused by irradiation with visible light, transfer of electrons and positive holes to the sites at which photocatalytic activity is developed, and formation of active radical species at the sites at which photocatalytic activity is developed all take place at the surface or near the surface, so the overall efficiency of catalytic reactions increases, and a high photocatalytic activity can be achieved.

When an oxygen-defective titanium oxide, a titanium oxide containing lower-valent titanium ions, or a titanium oxide which is a mixture of these is expressed as a whole by the formula $TiO_{(2-Y)}$, a preferred value for Y is 0.5 > Y > 0. If Y is greater than 0.5, the catalyst includes an increased amount of inactive sites inside the catalyst, and the catalytic activity almost entirely disappears. In the case of nitrogen-containing titanium oxide, the content of nitrogen is preferably up to 5 atomic percent of the oxygen content.

A titanium oxide photocatalyst according to the present invention can be prepared by subjecting a raw material in the form of titanium oxide or its precursor to heat treatment, or by a chemical vapor deposition reaction or a wet process preparation. Among these methods, a method in which titanium oxide or its precursor is subj ected to heat treatment is preferred.

Titanium oxide which is used as a raw material may be any type of titanium oxide including that of the above-described oxygen-defective type. A precursor of titanium oxide indicates any titanium compound having a main structure which can be converted into titanium oxide by heat treatment. Such a precursor includes titanium hydroxide, hydrated titanium oxide, and various hydrolyzable titanium compounds. Specific examples of hydrolyzable titanium compounds include chlorinated titanium compounds such as titanium oxychloride and titanium chloride, titanium alkoxides and their partial hydrolyzates, and the like. Hydrated titanium oxide includes titania sol. Since there is no clear boundary between titanium hydroxide and hydrated titanium oxide, "titanium hydroxide" used herein includes hydrated titanium oxide.

When the raw material is titanium oxide or titanium hydroxide, its form may be crystalline, amorphous, or a mixture of these. A preferred raw material is adequately crystalline. When the raw material includes a crystalline substance, the crystal form may be anatase, rutile, or a mixture of these types. In order to obtain titanium oxide having high photocatalytic activity by heat treatment, it is preferable to use a raw material comprising at least partially anatase titanium oxide.

A particularly preferred raw material is titanium hydroxide, titanium oxide, or both [these are hereinafter collectively referred to as titanium (hydr)oxide] prepared by neutralizing one or more acidic titanium compounds such as titanyl sulfate, titanium sulfate, or titanium tetrachloride with a nitrogen-containing base such as ammonia or an amine under such conditions that the pH at the completion of the reaction is 7 or below, followed by drying. If neutralization proceeds until the pH is alkaline, the crystallinity of the raw material is decreased.

In order to make the raw material adequately crystalline, the temperature of the neutralizing reaction can be elevated, or an aging period can be provided after the completion of neutralization. By adjusting the end point of the neutralization reaction to be a pH of 7 or below, the resulting titanium (hydr)oxide becomes sufficiently crystalline. A more preferred pH at the completion of the neutralization reaction is 5 or below. Use of a nitrogen-containing base such as ammonia or an amine for the neutralization reaction makes it possible to avoid contamination of the photocatalyst by a metal such as an alkali metal or an alkaline earth metal.

The raw material titanium oxide or its precursor is subjected to heat treatment in an atmosphere containing a hydrolyzable compound. Below, this heat treatment will be referred to as a first step of heat treatment. As a result of this heat treatment, the hydrolyzable compound in the atmosphere is bonded to the surface of the titanium oxide or its precursor. When the raw material is titanium oxide, its crystallinity can be increased by this heat treatment. When the raw material is a precursor of titanium oxide, the precursor may be converted into titanium oxide during the heat treatment, and in some cases the crystallinity can be increased. However, complete conversion of the precursor into titanium oxide and an increase in crystallinity can also be accomplished in the below-described second step of heat treatment.

After the first step of heat treatment, the raw material is brought into contact with water so as to cause the hydrolyzable compound bonded to the surface of the raw material during the first step of heat treatment to hydrolyze. As a result, the hydrolyzable compound bonded to the surface of the raw material is converted to form hydroxyl groups, leading to an increase in the amount of hydroxyl groups on the surface of the titanium oxide which is finally obtained.

After the raw material is brought into contact with water, it is subjected to the second step of heat treatment at a temperature of at least 350° C. As a result of this final heat treatment, the specific surface area is decreased, but the crystallinity can be further increased. This provides a titanium oxide photocatalyst according to the present invention which has a low specific surface area and a large amount of surface hydroxyl groups and which exhibits high photocatalytic activity when irradiated with visible light.

As the hydrolyzable compound contained in the atmosphere in the first step of heat treatment, it is preferable to use a hydrolyzable titanium compound, for example, a titanium chloride such as titanium tetrachloride, titanium trichloride, or titanium oxychloride; a titanium salt such as titanium sulfate, titanyl sulfate, or titanium fluoride; or a titanium alkoxide such as titanium butoxide or titanium isoproxide. However, it is also possible to use a halide of an element other than titanium such as $SnCl_4$, $SiCl_4$, or $BiCl_4$ or other hydrolyzable compound. A hydrolyzable compound is used which exhibits a vapor pressure such that a sufficient amount vapor is formed at the heat treatment temperature.

The heating temperature in the first step of heat treatment can be selected in a wide range of 50 - 600° C. A more preferred temperature range is 100 - 400° C. When the raw material is a precursor of titanium oxide, the temperature is preferably selected on the high side (such as at least 200°C) so that the precursor is at least partially converted into titanium oxide preferably with an increase in the crystallinity during this heat treatment.

If the temperature in the first step of heat treatment is too low, a reaction between the raw material and the hydrolyzable compound does not adequately take place, and there are cases in which it is not possible to increase the amount of surface hydroxyl groups. If the heat treatment temperature is too high, there are cases in which the titanium oxide is excessively reduced to cause the photocatalytic activity to decrease.

There is no particular restriction on the atmosphere containing a hydrolyzable compound. For example, it may be one or more gases selected from hydrogen, argon, nitrogen, carbon monoxide, ammonia, oxygen, water vapor, nitrogen oxide, nitrogen dioxide, air, and water vapor. Namely, it may be an oxidizing, reducing, or inert atmosphere. An atmosphere of air is satisfactory, taking cost into consideration. The content of the hydrolyzable compound in the atmosphere is limited depending on the temperature of the atmosphere and the vapor pressure of the compound, but generally it is preferably at most 10 volume percent. There is no particular restriction on the lower limit of this content, but if the content is too low, the amount of the hydrolyzable compound which is bonded to the raw material surface becomes low. Therefore, preferably it is at least 0.1 volume percent and more preferably at least 0.5 volume percent.

The raw material which has been subjected to the first step of heat treatment is then brought into contact with water such that the hydrolyzable compound bonded to the surface undergoes hydrolysis and is converted to form OH groups. This contacting treatment can be carried out by immersing the raw material in water and allowing it to stand or carrying out stirring. Alternatively, another method such as spraying with water may be used. The water which is used may be pure water, but it may also contain a nitrogen-containing base such as ammonia. Room temperature is adequate as the temperature for this contact, but it is also possible to carry out this treatment while heating or cooling. Contacting with water can also be carried out by a method in which the raw material is heated in an atmosphere containing a component which generates water vapor or water.

The raw material which has been contacted with water is then subjected to the second step of heat treatment, after it is dried if necessary, thereby producing a visible light-responsive titanium oxide photocatalyst according to the present invention. The second step of heat treatment is intended to completely convert the raw material to titanium oxide, if necessary, and increase its crystallinity.

The atmosphere for the second step of heat treatment is non-reducing, and it may be an oxygen-containing atmosphere such as atmospheric air, a vacuum, or an inert atmosphere. A reducing atmosphere is not desirable because it has a tendency to reduce the photocatalytic activity of the product. The atmosphere may contain moisture.

In the second step of heat treatment, the presence of oxygen in the atmosphere is effective for increasing the activity of the resulting catalyst. Therefore, a preferred atmosphere is an oxygen-containing atmosphere. In this case, the oxygen concentration of the atmosphere may be in the range of 1 - 100 volume percent, and preferably it is at least 20 volume percent. The higher the oxygen concentration, the greater is the tendency for the activity of the catalyst to increase. The remainder of the gas may be nitrogen, argon, or the like. Of course, the oxygen-containing atmosphere may be air or a mixed gas atmosphere of air and oxygen.

When an oxygen-containing atmosphere is used in this step, a reducing gas such as hydrogen can be contained in the atmosphere. In this case, the oxygen and the reducing gas in the atmosphere are caused to react by the catalytic activity at the surface of the titanium oxide, resulting in the formation of highly active water, which can reform the surface of the titanium oxide so as to produce a photocatalyst according to the present invention having an increased density of hydroxyl groups.

The temperature of the second step of heat treatment is at least 350° C and preferably at least 400° C. The upper limit is preferably at most 600° C for the same reasons as for the first step of heat treatment. If the heat treatment temperature is lower than 350° C, the specific surface area of the product increases, and the density of surface hydroxyl groups thereof decreases. On the other hand, if the heat treatment temperature is too high, the amount of hydroxyl groups decreases, so a sufficient photocatalytic activity in response to visible light cannot be imparted to titanium oxide. A preferred heat treatment temperature for the second step is 400 - 500° C. The duration of this heat treatment depends upon the temperature and the type of raw material (whether it is a precursor or titanium oxide), but normally it is from 30 minutes to 6 hours.

A visible light-responsive titanium oxide photocatalyst according to the present invention formed from titanium oxide having a specific surface area of at most 120 $m^2/g$ and having an amount of surface hydroxyl groups of at least 600 $\mu$eq/g may be supported on a substance which has no substantial susceptibility to catalyzing action of titanium oxide, such as silica, alumina, zeolilte, and inactive titania. In addition, in order to increase the efficiency of reaction, it may be doped with a promoter, e.g., a precious metal such as platinum, ruthenium, or palladium.

The form of the photocatalyst includes particles, fibers, thin films, and the like, and is preferably selected depending on the use. When it is in the form of particles, a particle size ranging from fine powder with a particle diameter of several nanometers to granules with a particle diameter of several tens of millimeters is possible, and the size and shape of the particles are not restricted. In the case of a thin film, the film is generally fixed atop a substrate, but its thickness and the like are not restricted. When forming the catalyst into a desired shape such as a thin film or fibers, in addition to particles of a titanium oxide photocatalyst according to the present invention, it is desirable to add a shaping additive, a binder, or the like. By adding these materials, the thickness of the thin film or the fiber diameter can be increased, and the strength, workability, and the like of a film or fiber can be improved.

A titanium oxide photocatalyst according to the present invention can be utilized as a photocatalytic functional member by adhering and fixing the photocatalyst to the surface of a substrate. The form in which the photocatalyst is fixed is selected in accordance with the surface shape of the substrate or its use, and there are no particular restrictions thereon, but typically it is the form of a film (including a thin film).

The substrate may be any of metals such as carbon steel, plated steel, chromated steel, enameled ware, stainless steel, aluminum, titanium, and aluminum; inorganic materials such as ceramics, glass, pottery, and quartz; and organic materials such as plastics, resins, and activated carbon. The substrate may also be a composite of these materials such as a precoated steel sheet. However, when either the entirety or the surface of the substrate is an organic material, some organic materials deteriorate or decompose due to the oxidizing force of the photocatalyst, and in such cases, the substrate surface is previously covered using a material which is not decomposed by a photocatalyst.

There are no particular limits on the shape of the substrate, and it may have any desired shape such as that of a thin sheet, a thick plate, fibers (including a woven, knitted, or nonwoven fabric), a net, or a tube. It may be a member having a complicated shape such that it can be used as fabricated, or it may be an object which has already been installed or which is being used. The surface of the substrate may be porous or dense.

A photocatalytic functional member of the type responsive to visible light according to the present invention can be manufactured by (1) a method in which a dispersion or a coating fluid containing particles of a visible light-responsive titanium oxide photocatalyst according to the present invention dispersed in a solvent is applied to a substrate, or (2) a method in which titanium oxide or a precursor thereof prior to heat treatment is adhered to a substrate, and then the same treatment as described with respect to a method for preparing a photocatalyst is carried out on the substrate surface.

The coating fluid used in above-described method (1) may consist essentially of only a photocatalyst and a dispersing medium, but preferably it further contains a binder.

It is possible to prepare a coating fluid merely by thoroughly mixing a titanium oxide photocatalyst according to the present invention with a dispersing medium and a binder. However, a titanium oxide photocatalyst prepared by the above-described method is generally in the form of fine particles with an average primary particle size of several nm to 100 nm, and it tends to aggregate extremely easily. If aggregation occurs, the resulting aggregate has an increased diameter on the order of several tens of micrometers, and it becomes difficult to uniformly disperse the particles in the medium.

Therefore, in a preferred embodiment of the present invention, particles of titanium oxide photocatalyst are previously adequately dispersed in a medium to prepare a dispersion of photocatalyst particles. Using this dispersion, a coating fluid is preferably prepared by adding a binder to the dispersion. In this manner, it is possible to form a thinner and more uniform photocatalytic film whereby the film properties and photocatalytic activity are improved.

The average particle diameter of the photocatalyst in the dispersion (particle diameter of the aggregate) is preferably at most 500 nm. A larger particle diameter produces powdering of the film and causes the storage stability to decrease. The average particle diameter of the photocatalyst is more preferably at most 300 nm and still more preferably at most 200 nm.

Examples of a medium for dispersing photocatalyst particles are water such as distilled water, deionized water, and ultrapure water; alcohols such as methanol, ethanol, and 2-propanol; ketones such as methyl ethyl ketone; and aromatic hydrocarbons such as benzene, toluene, and xylene. A mixture of two or more of these solvents can be used as long as they are compatible with each other.

Dispersing treatment is preferably carried out by mixing the photocatalyst with the medium so that the solids content of the resulting dispersion is in the range of several mass percent to 30 mass percent. If the solids content is outside of this range, dispersibility sometimes decreases. If necessary, a dispersing agent or a deflocculant may be added. An example of a dispersing agent is a carbonyl type or a sulfone type, and an example of a deflocculant is an acid such as hydrochloric acid or sulfuric acid. A base or an acid may be added in order to adjust the pH.

Dispersing treatment may be carried out using a paint shaker which is conventionally used for preparing coating fluids, but it is preferably carried out by a stronger dispersing means such as a media mill, application of shearing force using a rotating blade, thin film swirling, or ultrasonic waves. It is also possible to use a combination of two or more dispersing means.

When the resulting dispersion includes coarse particles which have aggregated, they are preferably removed by filtration or centrifugal separation. This is because coarse particles tend to become the starting point of peeling or powdering of a film. A solvent can be added to the dispersion after dispersing treatment in order to adjust the solids content.

This dispersion can be used as is as a coating fluid and applied to a substrate. If the photocatalyst is in the form of fine particles with an average particle diameter of 500 nm or less, a film can be formed from the dispersion in the absence of a binder, thereby making it possible to form a film consisting essentially of photocatalyst particles. However, such a film as formed has a low film strength and low adhesion. Therefore, a binder solution may be applied atop the film to impregnate the spaces between the particles of the photocatalyst with the binder.

A preferred coating fluid contains a binder in addition to the photocatalyst and a medium. The medium may be the same as described above with respect to the dispersion, but it is selected so as to dissolve or emulsify the binder.

When a coating fluid is prepared by mixing a binder with the above-described dispersion containing a titanium oxide photocatalyst, it is possible to prepare a coating fluid which has excellent dispersibility of photocatalyst particles, which has good storage stability, and which can form a film of high photocatalytic activity.

The amount of the binder is adjusted so that the content of the titanium oxide photocatalyst in the resulting film is 5 - 95 mass percent. A film which has a photocatalyst content of less than 5 mass percent exhibits almost no photocatalytic activity when irradiated with visible light, while if the content exceeds 95 mass percent, the proportion of the binder component becomes so small that the film easily peels due to poor film-forming properties. The content of the photocatalyst in the film is preferably 30 - 90 mass percent, and it is more preferably at least 50 mass percent in order to adequately obtain the photocatalytic activity.

As the binder component, metal oxide sols (which become a gel in the film) of materials such as silica, alumina, titania, magnesia, and zirconia, organic silane compounds, and organic resins such as silicone resins, fluororesins, urethane resins, and acrylic resins can be used. However, in cases in which decomposition of the binder component may occur due to the oxidizing force of the photocatalyst, it is preferable to use a difficult-to-decompose binder component such as a metal oxide sol or a silicone resin. When good workability and high strength are required of the photocatalytic functional member, the required properties can be obtained by adding an appropriate amount of an organic resin such as a fluororesin, an acrylic resin, or a urethane resin to the above-described difficult-to-decompose binder component.

A preferred binder component is a silicon compound such as silica (such as silica sol), a hydrolyzate/condensate of an organic silane compound, or a silicone resin. The silica may be a silica sol (a silica colloid) formed by hydrolysis and condensation of a silicate ester (such as ethyl silicate). A hydrolyzable organic silane compound capable of forming a film such as an alkoxysilane or a silane coupling agent may be used as an organic silane compound.

The coating fluid may contain one or more other components in addition to those described above. Examples of other components are a titanium oxide photocatalyst which is not of the type responsive to visible light (such as a conventional titanium oxide photocatalyst), and a carrier in the case where a photocatalyst is in the form of supported particles. A minor component such as a coloring agent (preferably an inorganic pigment) may also be contained in the film.

Application of the coating fluid to a substrate can be performed by various known methods in accordance with the properties of the coating fluid and the shape of the substrate to be coated. After application, the applied film is dried with heating if necessary (in some cases, it is further cured). The drying (curing) temperature is determined depending on the composition of the coating fluid (the type of solvent and binder) and the temperature which the substrate can resist.

The thickness of the photocatalyst-containing film formed on the substrate is preferably at least 0.5 micrometers. If the film is thinner than 0.5 micrometers, the amount of the photocatalyst becomes too small, and the photocatalytic activity in response to visible light becomes extremely low. The thickness of the film can be suitably selected in accordance with the required catalytic performance and cost, but from the standpoint of the stability of catalytic performance and catalytic activity, it is more preferably at least 3 micrometers and still more preferably at least 5 micrometers. There is no particular restriction on the upper limit of the film thickness, but taking into consideration cost and the saturation of the effects of the film, the film thickness is at most 30 micrometers and preferably at most 25 micrometers.

A second method for manufacturing a photocatalytic functional member is a method in which a raw material in the form of titanium oxide and/or its precursor is previously adhered to a substrate surface, and then the same treatment as in the preparation of photocatalyst particles according to the present invention, i.e., a first step of heat treatment in an atmosphere containing a hydrolyzable compound, contacting with water, and a second step of heat treatment at 350° C or above are successively carried out on the substrate. Since heat treatment is carried out on the substrate surface, a heat resistant substrate which can withstand this heat is used (such as a metal or ceramic).

In this second method, adhesion of titanium oxide and/or its precursor to the substrate surface can be carried out by preparing a coating fluid containing a raw material of titanium oxide and/or its precursor, and applying and drying it in the same manner as described above. Since the adhered raw material must be subjected to heat treatment in the next step, it is preferable that a binder not be used, or when it is used, that it be present in the coating fluid in a small amount. In a preferred adhering method, a partially hyrdolyzed titanium compound (such as a partial hydrolyzate of a titanium alkoxide) or a titania sol is dissolved in a solvent to prepare a solution-type coating fluid, which is then applied to the surface of a substrate and dried, thereby forming a film consisting essentially of a titanium oxide precursor on the substrate surface. In another preferred method, a coating fluid prepared from particles of titanium oxide or an insoluble precursor thereof and titania sol as a binder is applied to form a film consisting essentially of titanium oxide and/or its precursor on the substrate surface. A method in which titanium oxide and/or its precursor is adhered to the surface of a substrate is not limited to the above-described coating methods, and it is possible to use a well-known vapor phase film-forming method such as CVD or PVD, although it entails complicated operations and high costs.

Subsequently, in the same manner as described above with respect to the method of preparing a photocatalyst according to the present invention, the substrate is subjected to a first step of heat treatment in an atmosphere containing a hydrolyzable compound, then contact treatment with water, and finally a second step of heat treatment, whereby the raw material adhered on the substrate surface becomes a visible light-responsive titanium oxide photocatalyst, and a photocatalytic functional member according to the present invention is produced. When the adhered material does not contain a binder or when the film strength is inadequate, a binder-containing fluid may be applied to increase the film strength.

Particles of the raw material which has undergone only the above-described first step of heat treatment may be adhered to the substrate. In this case, the particles are preferably dispersed in a medium which preferably contains water with or without a binder, and the dispersion is applied to the substrate to adhere the particles to the substrate. As a result, contacting with water and adhesion to the substrate can be simultaneously achieved. Then, the second step of heat treatment is carried out on the substrate and if necessary impregnation of the adhered particles with a binder is performed, resulting in the preparation of a photocatalytic functional member according to the present invention.

A titanium oxide photocatalyst and a photocatalytic functional member according to the present invention described above exhibit a photocatalytic activity when irradiated not only with ultraviolet light but also with visible light having a wavelength of at least 400 nm such that they can exert excellent effects such as decomposing, removing, and rendering harmless various harmful substances and adhered substances.

In actual use, they are preferably used in an environment in which the photocatalyst can contact substances which are to be decomposed and in which the photocatalyst can at the same time be irradiated with visible light. The light source can be any type capable of emitting light which includes visible light of at least 400 nm in wavelength. For example, sunlight, fluorescent lamps, halogen lamps, black lights, xenon lamps, and mercury lamps can be used.

Some non-limiting examples of harmful substances include gases contained in the atmosphere such as $NO_x$, $SO_x$, CFC (chlorofluorocarbons), ammonia, and hydrogen sulfide; organic compounds such as aldehydes, amines, mercaptans, alcohols, BTX, and phenols; organohalogen compounds such as trihalomethane, trichloroethylene, and CFC; various agricultural chemicals such as herbicides, germicides, and insecticides; biological oxygen-demanding substances such as proteins and amino acids; surface active agents; inorganic compounds such as cyanide compounds and sulphur compounds; various heavy metal ions; and microorganisms such as bacteria, actinomycetes, fungi, and algae. These substances may be present in water. Adhered substances refer to substances which directly adhere to the surface of a photocatalyst or a photocatalytic functional member, and they include bacteria such as *E-coli,* staphylococci, *Pseudomonas aeruginosa,* and mold; oil, tobacco resin, fingerprints, rain streaks, and mud.

The following examples illustrate the present invention but are not intended to limit it in any way. In the examples, unless otherwise specified, parts and percent refer to parts by mass and mass percent.

Example 1

[Preparation of a titanium oxide photocatalyst]

Aqueous ammonia (28%) was added dropwise to an aqueous $TiCl_4$ solution (Ti concentration of 8.25%) with stirring at room temperature until the pH reached 4.8. The solids which were precipitated were collected by filtration, and after thorough washing with water, they were dried *in vacuo* at 80°C to obtain a titanium (hydr)oxide powder for use as a raw material.

200 grams of the resulting raw material powder were placed into a kiln-type heat treatment apparatus, and after the atmosphere in the apparatus was replaced with nitrogen, the temperature was increased to 315° C. Thereafter, a hydrogen gas containing 1.4 volume percent of $TiCl_4$ as a hydrolyzable compound was introduced into the apparatus and was brought into contact with the raw material powder for 20 minutes to carry out a first step of heat treatment, thereby causing the titanium chloride to bond to the surface of the powder. Then, the atmosphere of the apparatus was replaced with argon gas, and it was gradually cooled to room temperature. The powder removed from the apparatus was washed with water for pretreatment and then subjected to a second step of heat treatment for 2 hours under the conditions shown in Table 1 to obtain a titanium oxide photocatalyst according to the present invention. Washing with water was carried out by putting the powder into water and stirring, followed by filtration and drying at 80° C. A muffle furnace and a kiln furnace were used as heat treatment apparatuses. A muffle furnace has a tendency to feed a larger amount of oxygen than a kiln furnace.

Each of the resulting powders of a titanium oxide photocatalyst and a powder of a commercially available visible light-responsive titanium oxide photocatalyst was measured for its ESR spectrum and photocatalytic activity by an acetaldehyde decomposition test as described below.

[ESR measurement]

A sample which was placed into a quartz tube for ESR measurement (outer diameter of 1.5 mm, inner diameter of 0.8 mm) in air and sealed in air, and another sample which was placed into a quartz tube for ESR measurement (outer diameter of 1.5 mm, inner diameter of 0.8 mm) and vacuum sealed using a rotary vacuum pump were irradiated with visible light from a 150 watt halogen lamp which passed through an ultraviolet-cut filter (L42 manufactured by Toshiba) at a temperature of 5 K or lower (under cooling with liquid helium). The ESR spectrum was measured under the following conditions immediately before the start of irradiation, immediately after the start of irradiation with visible light, and immediately after the stop of irradiation with visible light.

Measurement apparatus: X band (9 GHz band) electron spin resonance apparatus (JES-RE2X) manufactured by JEOL, Ltd.,
Lower limit of detection of ESR signals: 1E10/mT (indicating the presence of 1E10 spins (unpaired electrons) contributing to the same ESR signal in the sample),
Region of magnetic field scanning: $318 \pm 5$ eV
Width of magnetic field modulation: 0.05 mT
Magnetic field modulation frequency: 100 kHz
Scanning time: 1 minute,
Number of scans: 5,
Amplification: 500 times,
Delay time: 0.1 second,
Microwave output: 0.1 mW.
The g value of an ESR signal of a sample was calculated by the following equation using the third (g = 2.0303) and fourth (g = 1.981) signals of a $Mn^{2+}/MgO$ marker (installed on the apparatus) as standards:

$$g = 2.0303 - (2.0303 - 1.981) \times L3/(L3 + L4)$$

L3: The difference between the magnetic field of the ESR signal of the marker (third signal) and the sample;
L4: The difference between the magnetic field of the ESR signal of the marker (fourth signal) and the sample.

Since the detected ESR signal was a differentiated signal, the difference between the maximum value and the minimum value of the differentiated signal was taken as the strength of the ESR signal, and it was standardized by the ratio of this strength which was thus determined to the strength of the third signal of the Mn marker which was determined in the same manner.

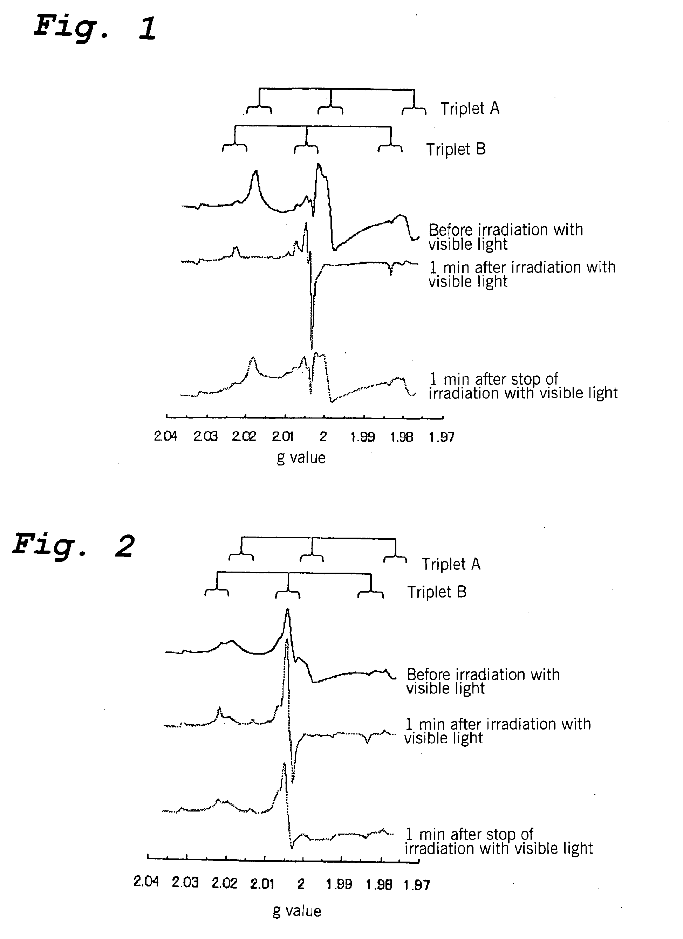

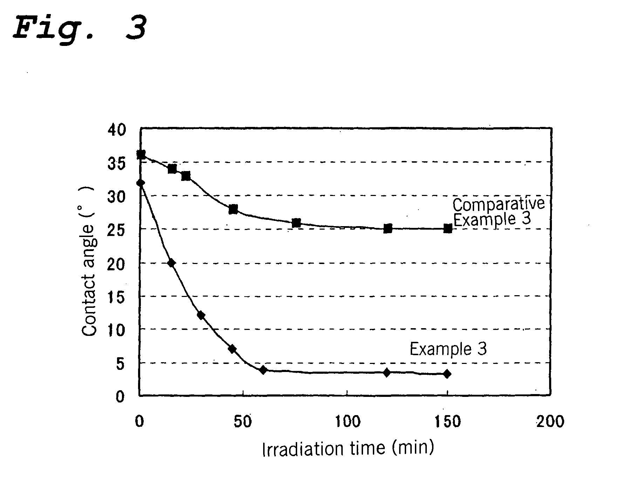

ESR spectra of a sample (an example of the present invention) of Run No. 1 measured in air at 5 K or below before irradiation with visible light, immediately after the start of irradiation (1 minute after), and immediately after the end of irradiation (1 minute after) are shown in Figure 1, and similar ESR spectra of a sample of Run No. 7 (commercial product) are shown in Figure 2.

As can be seen from Figures 1 and 2, when the ESR spectra of a titanium oxide-based visible light-responsive photocatalyst are measured at a temperature of 5 K or below, triplet signal A (g values = 1.993 - 2.003, 1.976 - 1.982, 2.010 - 2.020) and triplet signal B (g values = 2.033 - 2.011, 1.982 - 1.988, 2.018 - 2.028), which can be assigned to different oxygen defects from each other, are observed.

In the ESR spectra of a titanium oxide photocatalyst according to the present invention (Figure 1), the ESR signal strength of triplet signal A is smaller immediately after the start of irradiation than before irradiation or immediately after the stop of irradiation, and conversely the ESR signal strength of triplet signal B is larger immediately after the start of irradiation than before irradiation or immediately after the stop of irradiation.

In contrast, with the commercially-available titanium oxide photocatalyst (Figure 2), the ESR signal strength of triplet signal A is smaller than the ESR signal strength of triplet signal B on all occasions including before irradiation, immediately after the start of irradiation, and immediately after the stop of irradiation.

[Measurement of photocatalytic activity (acetaldehyde decomposition test)]

A square tray measuring 40 mm on a side and having a sample (0.3 g) placed thereon was placed into a quartz reaction cell. The cell was connected to a closed circulating line (total internal volume of approximately 3.8 L), and acetaldehyde (approximately 240 ppm) diluted with nitrogen gas containing 20 volume percent of oxygen was introduced into the line. While the gas was circulated, irradiation was performed on the cell with light from a 250 watt high pressure mercury vapor lamp which had passed through an ultraviolet-cut filter (L42 made by Toshiba). Due to the characteristics of the filter, a slight amount of near ultraviolet rays with a wavelength from 390 to 400 nm was contained in the light, but in this region, there is no emission line from the mercury lamp, so almost all of the irradiated light was visible light with a wavelength of at least 400 nm. The reaction was monitored by measuring the concentration of carbon dioxide generated by the decomposition of acetaldehyde at a time interval using an automatic gas chromatograph connected to the circulating line. The performance of the photocatalyst was evaluated by the speed of generation of carbon dioxide. The results are shown in Table 1.

For the ESR spectra measured in air at a temperature of 5 K or below, the ratios ($Ia_1/Ia_0$ and $Ib_1/Ib_0$) of the signal strengths ($Ia_1$ and $Ib_1$) immediately after the start of irradiation of the main signal of triplet signal A (g value in the range of 1.993 - 2.003) and the main signal of triplet signal B (g value in the range of 2.003 - 2.011) to the corresponding signal strengths before irradiation with visible light ($Ia_0$ and $Ib_0$), and the ratios ($Ia_2/Ia_0$ and $Ib_2/Ib_1$) of the signal strengths immediately after the stop of irradiation of the above-described main signals ($Ia_2$ and $Ib_2$) to the signal strengths thereof before the start of irradiation ($Ia_0$ in the case of triplet signal A) or to the signal strength immediately after the start of irradiation ($Ib_1$ in the case of triplet signal B) were determined. For the ESR spectra measured *in vacuo* at a temperature of 5 K or below, the ratios ($Ic_2/Ic_0$ and $Id_2/Id_1$) of the signal strengths immediately after the stop of irradiation of the above-described main signals ($Ic_2$ and $Id_2$) to the signal strengths thereof before the start of irradiation ($Ic_0$ in the case of triplet signal A) or to the signal strength immediately after the start of irradiation ($Id_1$ in the case of triplet signal B) were determined. These ratios are shown in Table 1 together with the results of the measurement of photocatalytic activity.

Table 1

| Run No. | Pretreatment | Heat Treatment Conditions | | | Rate of $CO_2$ formation (ppm/mm) | Ratio of ESR Signals[2] | | | | | |
|---|---|---|---|---|---|---|---|---|---|---|---|
| | | Atmosphere | Temperature | Furnace | | A1 | A2 | A3 | B1 | B2 | B3 |
| 1 | washing with water | air | 400°C | muffle | 0.40 | 0.11 | 0.60 | 0.98 | 4.77 | 0.28 | 0.22 |
| 2 | washing with water | air | 450°C | muffle | 0.44 | 0.15 | 0.60 | 0.68 | 6.42 | 0.29 | 0.23 |
| 3 | washing with water | air | 450°C | kiln | 0.51 | 0 | 0.44 | 0.79 | 7.67 | 0.39 | 0.40 |
| 4 | washing with water | $O_2 + Ar$[1] | 450°C | muffle | 0.40 | 0.11 | 0.52 | 0.80 | 6.33 | 0.26 | 0.18 |
| 5 | washing with water | air | 500°C | muffle | 0.35 | 0.06 | 0.53 | 0.63 | 5.91 | 0.32 | 0.18 |
| 6 | Commercially available titanium oxide photocatalyst powder | | | | 0.30 | 0.42 | 0.25 | 0.25 | 2.65 | 0.58 | 0.50 |

[1] 20% oxygen + 80% argon

[2] Al = $Ia_1/Ia_0$, A2 = $Ia_2/Ia_0$, A3 = $Ic_2/Ic_0$, B 1 = $Ib_1/Ib_0$, B2 = $Ib_2/Ib_1$, B3 = $Id_2/Id_1$

As shown in Table 1, for the ratio of the ESR signal strength during irradiation with visible light in air to that before irradiation, when the ratio ($Ia_1/Ia_0$, shown by A1 in Table 1) for the main signal of triplet signal A was smaller than 0.4 (preferably smaller than 0.2), and the ratio ($Ib_1/Ib_0$, shown by B1 in Table 1) for the main signal of triplet signal B was larger than 3 (preferably larger than 4.5), the photocatalytic activity became high.

Concerning the ratio of the ESR signal strength immediately after the stop of irradiation with visible light to the strength before irradiation, the photocatalytic activity increased when the ratio ($Ia_2/Ia_0$, shown by A2 in Table 1) of the strength of the main signal of triplet signal A in air was larger than 0.3 (preferably larger than 0.5), the ratio thereof *in vacuo* ($Ic_2/Ic_0$, shown by A3 in Table 1) was larger than 0.4 (preferably larger than 0.6), and the ratio *in vacuo* was larger than the ratio in air.

On the other hand, as for the ratio of the ESR signal strength immediately after the stop of irradiation with visible light to that during irradiation, when the ratio in air ($Ib_2/Ib_1$, shown by B2 in Table 1) of the strength of the main signal of triplet signal B was smaller than 0.5 (preferably smaller than 0.4) and the ratio thereof *in vacuo* ($Id_2/Id_1$, shown by B3 in Table 1) was smaller than 0.45, the photocatalytic activity increased.

Runs Nos. 3 and 4 in Table 1 are examples in which only the apparatus for heat treatment was different. The photocatalytic activity for heat treatment in a kiln-type furnace was larger than for heat treatment in a muffle furnace. It is thought that the difference in oxygen concentration during heat treatment is responsible for this result.

A commercially available visible light-responsive titanium oxide photocatalyst did not satisfy the ranges prescribed by the present invention for any of these ratios, and the photocatalytic activity was relatively low.

Example 2

[Preparation of a titanium oxide photocatalyst]

Aqueous ammonia (28%) was added dropwise to an aqueous TiCl$_4$ solution (Ti concentration of 8.25%) with stirring at room temperature until the pH reached 4.8. The solids which were precipitated were collected by filtration, and after being thoroughly washed with water, they were vacuum dried at 80° C to obtain a titanium (hydr)oxide powder for use as a raw material.

200 grams of the resulting raw material powder were placed into a kiln-type heat treatment apparatus, and after the interior of the apparatus was replaced with argon gas, it was heated to 315° C. Thereafter, a hydrogen gas containing 1.4 volume percent of TiCl$_4$ as a hydrolyzable compound was introduced into the apparatus and was brought into contact with the raw material powder for 20 minutes to perform a first stage of heat treatment, thereby causing the titanium chloride to bond to the surface of the powder. Then, the interior of the apparatus was again replaced by argon gas and gradually cooled to room temperature. The powder which was removed from the apparatus was put into water at room temperature and stirred such that the groups which had bonded to the powder surface underwent hydrolysis and were converted to form hydroxyl groups. Then, the powder was collected by filtration and dried at 80° C. This powder was subjected to a second stage of heat treatment in air at 450° C for 2 hours using a muffle furnace to obtain a titanium oxide photocatalyst according to the present invention.

As a result of X-ray diffraction analysis, it was found that both before and after the second stage of heat treatment, the titanium oxide primarily comprised anatase crystals, but the sample after the heat treatment also contained rutile crystals. For the sample after heat treatment, the presence of oxygen defects was also confirmed by the fact that two types of triplet signals A and B derived from oxygen defects were observed in ESR measurement at a temperature of 5 K or below. The ESR spectrum of this photocatalyst was the same as that of Run No. 2 of Example 1.

The amount of hydroxyl groups on the surface of the titanium oxide obtained by the second stage of heat treatment was determined according to the below-described fluoride ion adsorption method (the method described in H. P. Boehm, Angew. Chem., 78, 617 (1966)).

[Fluoride ion adsorption method]

40 cm$^3$ of a 0.0 1 M NaF solution in a 0.2M acetic acid - 0.2M sodium acetate buffer solution (pH of 4.6) were prepared in a resin bottle. A 0.1 g sample of the above-described titanium oxide powder was added to this solution and stirred for 24 hours. After filtration of the solution, the concentration of fluoride ions in the filtrate was measured using a fluoride ion electrode and an ion meter. Based on the difference between the initial concentration of fluoride ions in the solution and the concentration after fluoride ion adsorption, the amount of fluoride ions ($\mu$eq) by which the hydroxyl groups in the sample were replaced was determined, and the amount of surface hydroxyl groups ($\mu$eq/g) was calculated as the amount of hydroxyl groups ($\mu$eq) per 1 g of catalyst.

A non-buffered NaF solution was prepared using distilled water as a solvent for NaF, instead of the above-described buffer solution, and this solution was used to determine the amount of surface hydroxyl groups replaced by fluoride ions in the same manner as described above. As described above, under non-buffered conditions, it is known that only terminal type hydroxyl groups are replaced by fluoride ions, so in this case, the amount of terminal type hydroxyl groups in the surface hydroxyl groups was determined.

These measurements gave the results that the amount of hydroxyl groups on the surface of the titanium oxide (overall amount of surface hydroxyl groups) was 822 $\mu$eq/g and that the amount of terminal type hydroxyl groups (T) was 190 $\mu$eq/g. Accordingly, the amount of bridge type hydroxyl groups (B) was the difference between the two, or 632 $\mu$eq/g. The ratio of the two types of hydroxyl groups (T/B) was calculated as 0.30. The specific surface area of the titanium oxide measured by the BET method was 49 $m^2$/g. Based on the amount of surface hydroxyl groups and the specific surface area, the density of surface hydroxyl groups was 16.8 $\mu$eq/$m^2$. These results are shown in Table 2 together with the result of measurement of the photocatalytic activity (rate of $CO_2$ formation).

Comparative Examples 1 - 2

Using a commercially available, visible light-responsive titanium oxide photocatalyst powder (Comparative Example 1) and titanium oxide manufactured by Nippon Aerosil (P25), the amount of surface hydroxyl groups and the specific surface area were measured by the methods described in Example 2. Their photocatalytic activity was measured by the acetaldehyde decomposition test described in Example 1. The results are shown in Table 2.

Table 2

| | Example 2 | Comparative Example 1 | Comparative Example 2 |
|---|---|---|---|
| Specific surface area ($m^2$/g) | 49 | 76 | 50 |
| Total amount of surface hydroxyl groups ($\mu$eq/g) | 822 | 590* | 475* |
| Density of surface hydroxyl groups ($\mu$eq/$m^2$) | 16.8 | 7.8 | 9.5 |
| Amount of terminal type hydroxyl groups ($\mu$eq/g) (T) | 190 | 79 | 66 |
| Amount of bridge type hydroxyl groups ($\mu$eq/g) (B) | 632 | 511 | 409 |
| T/B ratio | 0.30 | 0.16 | 0.16 |
| Rate of $CO_2$ formation (ppm/min) | 0.46 | 0.32 | 0.14 |
| *Outside the range of the present invention | | | |

As can be seen from Table 2, the photocatalysts of Example 2, Comparative Example 1, and Comparative Example 2 each had a specific surface area smaller than 120 $m^2$/g, but the total amount of surface hydroxyl groups and the ratio of terminal type hydroxyl groups to bridge type hydroxyl groups were larger for the titanium oxide photocatalyst according to the present invention than for the photocatalysts of Comparative Examples 1 and 2, and these results lead to a high photocatalytic activity in response to visible light.

Example 3

No. 1

Aqueous ammonia (28%) was added dropwise to an aqueous $TiCl_4$ solution (Ti concentration of 8.25%) with stirring at room temperature until the pH reached 4.1. After this reaction mixture was allowed to stand for 10 days at room temperature to age the resulting precipitates, the solids were collected by filtration, then thoroughly washed with water, and dried *in vacuo* at 80° C to obtain a titanium (hydr)oxide powder for use as a raw material.

200 grams of the resulting raw material powder were placed into a kiln-type heat treatment apparatus, the interior of the apparatus was replaced by argon, and its temperature was raised to 315° C. Then, hydrogen gas containing 1.4 volume percent of $TiCl_4$ as a hydrolyzable compound was introduced into the apparatus and was brought into contact with the raw material powder for 20 minutes to carry out a first stage of heat treatment and bond titanium chloride groups to the surface of the powder. Subsequently, the interior of the apparatus was again replaced by argon gas, and it was gradually cooled to room temperature. The powder which was removed was put into water at room temperature and stirred to hydrolyze the groups which were bonded to the surface of the powder and convert them to form hydroxyl groups. Thereafter, the powder was collected by filtration and dried at 80° C. The powder was then subjected to a second stage of heat treatment using a muffle furnace in air at 350° C for 2 hours to obtain a titanium oxide photocatalyst according to the present invention.

Nos. 2 - 4

Using the raw material powder of titanium (hydr)oxide prepared in No. 1, a titanium oxide photocatalyst was prepared by the same procedure as in No. 1 except that the temperature for the second stage of heat treatment was 400° C for No. 2, 450° C for No. 3, or 500° C for No. 4.

No. 5

The raw material powder of titanium (hydr)oxide prepared in No. 1 was processed in the same manner as in No. 1 except that the temperature for the second stage of heat treatment was changed to 300° C to prepare a titanium oxide photocatalyst.

No. 6

The raw material powder of titanium (hydr)oxide prepared in No. 1 was processed in the same manner as in No. 1 except that contact treatment with water was not carried out and the second stage of heat treatment was carried out in an argon atmosphere at 300° C to prepare a titanium oxide photocatalyst.

No. 7

The raw material powder of titanium (hydr)oxide prepared in No. 1 was processed in the same manner as in No. 1 except that contact treatment with water was not carried out and the second stage of heat treatment was carried out in an argon atmosphere at 450°C to prepare a titanium oxide photocatalyst.

Using the titanium oxide photocatalysts obtained in Nos. 1 - 7, an acetaldehyde decomposition test was carried out by the method described in Example 1. For each catalyst, the test result is shown in Table 3 along with the measurements of the amounts of each type of hydroxyl groups, the T/B ratio, and the specific surface area.

The results of X-ray diffraction analysis of a sample obtained prior to the second stage of heat treatment showed that the sample was titanium oxide predominantly comprising anatase crystals in each run. With a sample obtained after the heat treatment, it was titanium oxide predominantly comprising anatase crystals in each run when the temperature of the second stage of heat treatment was at most 450° C, but when the heat treatment temperature was 500° C, it also included a slight amount of rutile crystals.

In the ESR measurement of the titanium oxide photocatalysts of Nos. 1 - 4 at a temperature of 5 K or below, two types of triplet signals A and B derived from oxygen defects were observed. For the titanium oxide photocatalysts of Nos. 5 - 7, only a main signal with a g value in the range of 1.993 - 2.003 was observed for signal A, and auxiliary signals with g values in the ranges of 1.976 - 1.982 and 2.010 - 2.020 were essentially not observed.

Table 3

| | No.1 | No.2 | No.3 | No.4 | No.5 | No.6 | No.7 |
|---|---|---|---|---|---|---|---|
| Specific surface area ($m^2$/g) | 120 | 90 | 67 | 54 | 168* | 163* | 80 |
| Total amount of surface hydroxyl groups ($\mu$eq/g) | 737 | 699 | 687 | 605 | 841 | 690 | 580* |
| Density of surface hydroxyl groups ($\mu$eq/$m^2$) | 6.1 | 8.3 | 10.3 | 11.2 | 5.0 | 4.2 | 7.3 |
| Amount of terminal type hydroxyl groups ($\mu$eq/g) (T) | 131 | 130 | 206 | 142 | 112 | 110 | 84 |
| Amount of bridge type hydroxyl groups ($\mu$eq/g) (B) | 606 | 569 | 481 | 463 | 729 | 580 | 496 |
| T/B ratio | 0.22 | 0.23 | 0.43 | 0.31 | 0.15 | 0.19 | 0.17 |
| Speed of $CO_2$ formation (ppm/min) | 0.34 | 0.40 | 0.51 | 0.35 | 0.29 | 0.24 | 0.29 |
| *Outside the range of the present invention | | | | | | | |

As shown by Nos. 5 - 6, when the temperature of the second stage of heat treatment was lower than 350° C, the specific surface area was large. As shown by No. 7, even when the temperature of the second stage of heat treatment was 450° C, if contacting with water was not carried out, the overall amount of surface hydroxyl groups could not be sufficiently increased. As a result, the photocatalysts of Nos. 5 - 7 had a low photocatalytic activity in response to visible light compared to the photocatalysts of Nos. 1 - 4 which had a specific surface area and amount of hydroxyl groups according to the present invention.

Example 4

This example illustrates the preparation of a photocatalytic functional member according to the present invention.
A photocatalyst dispersion having a solids content of 10% was prepared by dispersing 20 parts of the titanium oxide photocatalyst prepared in Example 2 in 180 parts of distilled water using a media mill and zirconia beads having a diameter of 0.1 mm. The particle size of the titanium oxide photocatalyst in this dispersion which was measured using a particle size distribution analyzer manufactured by Horiba, Ltd. (LA 700) was approximately 140 nm. The average particle diameter of the photocatalyst particles before dispersing treatment was approximately 15 micrometers.
To 100 parts of this photocatalyst dispersion, 40 parts of an aqueous solution containing methyltriethoxysilane which had partially been hydrolyzed using nitric acid (solids content of 20 mass % as converted to $SiO_2$), 50 parts of ethanol, and a minute amount of a silicone-based surface active agent were added and thoroughly mixed for 60 minutes using a paint shaker to prepare a coating fluid. The content of the Ti compound in the non-volatile components of the coating fluid was 55.4% as converted to $TiO_2$.
A photocatalytic functional steel sheet was prepared by applying the coating fluid to a precoated steel sheet as described below. First, a commercially available silicone resin-based primer was applied to a precoated steel sheet (having a thickness of 0.3 mm and coated with a polyester-based paint) so as to form a primer layer having a thickness of 0.8 micrometers. The coating fluid according to the present invention was applied atop this primer layer using a roll coater, and it was dried for 1 minute at 200° C to prepare a photocatalytic functional steel sheet having a coating film containing a titanium oxide photocatalyst according to the present invention on the precoated steel sheet as a substrate. The thickness of the coating film was approximately 1 micrometer. When a separately prepared galvanized steel sheet was coated in the same manner, the content of Ti compounds in the photocatalyst coating film was approximately 55 $\pm$ 5% as converted to $TiO_2$.
This photocatalytic functional steel sheet was used to perform an acetaldehyde decomposition test in the same manner as in Example 1. As the result, the rate of $CO_2$ formation was 0.11 ppm/minute.
In addition, the same sample as above was used to evaluate the degree of increase in hydrophilicity caused by irradiation with visible light.
The hydrophilicity test was carried out by irradiating a sample with light from a white fluorescent lamp through a commercially available acrylic resin plate as a UV-cut filter. The intensity of illumination was 10,000 lux. Samples were removed at regular intervals while continuing irradiation with visible light and were evaluated for the degree of increase in hydrophilicity by dripping a water droplet onto the surface of the photocatalyst and measuring the contact angle of the water. The results are shown in Figure 3.

Comparative Example 3

Using a conventional titanium oxide photocatalyst powder (UV-responsive type, and specifically STO1 manufactured by Ishihara Sangyo) as a titanium oxide photocatalyst powder, a photocatalyst dispersion, a coating fluid, and a photocatalytic functional steel sheet were prepared in the same manner as in Example 4. In addition, the resulting photocatalytic functional steel sheet was used to perform an acetaldehyde decomposition test and a hydrophilicity test under irradiation with visible light in the same manner as in Example 4.
The rate of $CO_2$ formation in the acetaldehyde decomposition test was less than 0.01 ppm/minute. The results of the hydrophilicity test are shown in Figure 3.
As can be seen from Figure 3, with a photocatalytic functional member of Example 4 according to the present invention, when it was irradiated with visible light, the contact angle rapidly decreased indicating that the hydrophilicity increased. Although not shown in the graph, the contact angle became 0 degrees after irradiation for 10 hours. In contrast, with the photocatalytic functional member of Comparative Example 3, the contact angle initially slightly decreased, but the increase in hydrophilicity subsequently stopped.

**Claims**

1. A titanium oxide photocatalyst which exhibits photocatalytic activity when irradiated with visible light, **characterized by** having an ESR spectrum measured before irradiation with visible light at a temperature of 5 K or below in which triplet signal A consisting of a main signal with a g value in the range of 1.993 - 2.003 and two auxiliary signals with g values in the ranges of 1.976 - 1.982 and 2.010 - 2.020, respectively, are observed.

**2.** A titanium oxide photocatalyst as set forth in claim 1 which has an ESR spectrum measured under irradiation with visible light at a temperature of 5 K or below in which triplet signal A is not observed, or even if it is observed, the strength of each signal of triplet signal A is smaller than the strength thereof measured before irradiation with visible light.

**3.** A titanium oxide photocatalyst as set forth in claim 2 wherein the ratio ($Ia_1/Ia_0$) of the strength $Ia_1$ of the main signal of triplet signal A measured in air at a temperature of 5 K or below under irradiation with visible light to the strength $Ia_0$ thereof measured before irradiation with visible light is smaller than 0.4.

**4.** A titanium oxide photocatalyst as set forth in any one of claims 1 - 3 which has an ESR spectrum measured immediately after the stop of irradiation with visible light at a temperature of 5 K or below in which the strength of each signal of triplet signal A is larger than the strength thereof measured under irradiation with visible light.

**5.** A titanium oxide photocatalyst as set forth in any one of claims 1 - 4 wherein the ratio ($Ia_2/Ia_0$) of the strength $Ia_2$ of the main signal of triplet signal A measured in air at a temperature of 5 K or below immediately after the stop of irradiation with visible light to the strength $Ia_0$ thereof measured before irradiation with visible light is greater than 0.3, and the ratio ($Ic_2/Ic_0$) of the strength $Ic_2$ of the main signal of triplet A measured *in vacuo* at a temperature of 5 K or below immediately after the stop of irradiation with visible light to the strength $Ic_0$ thereof measured before irradiation with visible light is greater than 0.4.

**6.** A titanium oxide photocatalyst as set forth in any one of claims 1 - 5 wherein the main signal of triplet signal A of an ESR spectrum measured at a temperature of 5 K or below comprises at least two signals having g values in the ranges of 1.993 - 2.000 and 1.998 - 2.003, respectively.

**7.** A titanium oxide photocatalyst as set forth in any one of claims 1 - 6 which has an ESR spectrum measured before irradiation with visible light at a temperature of 5 K or below in which triplet signal B consisting of a main signal having a g value in the range of 2.003 - 2.011 and two auxiliary signals having g values in the ranges of 1.982 - 1.988 and 2.018 - 2.028, respectively, is observed in addition to triplet signal A.

**8.** A titanium oxide photocatalyst as set forth in claim 7 wherein the strength of the main signal of triplet signal A is greater than the strength of the main signal of triplet signal B in the ESR spectrum measured before irradiation with visible light at a temperature of 5 K or below.

**9.** A titanium oxide photocatalyst as set forth in claim 7 or 8 wherein triplet signal B is also observed in an ESR spectrum measured under irradiation with visible light at a temperature of 5 K or below, and the strength of each signal of triplet signal B measured under irradiation with visible light is larger than the strength thereof measured before irradiation with visible light.

**10.** A titanium oxide photocatalyst as set forth in claim 9 wherein the ratio ($Ib_1/Ib_0$) of the strength $Ib_1$ of the main signal of triplet signal B measured in air at a temperature of 5 K or below under irradiation with visible light to the strength $Ib_0$ thereof measured before irradiation with visible light is greater than 3.

**11.** A titanium oxide photocatalyst as set forth in any one of claims 7 - 10 wherein the strength of the main signal of triplet signal B is greater than the strength of the main signal of triplet signal A in an ESR spectrum measured under irradiation with visible light at a temperature of 5 K or below.

**12.** A titanium oxide photocatalyst as set forth in any one of claims 7 - 11 wherein the strength of each signal of triplet signal B in an ESR spectrum measured immediately after the stop of irradiation with visible light at a temperature of 5 K or below is smaller than the strength thereof measured under irradiation with visible light.

**13.** A titanium oxide photocatalyst as set forth in claim 12 wherein the ratio ($Ib_2/Ib_1$) of the strength $Ib_2$ of the main signal of triplet signal B measured in air at a temperature of 5 K or below immediately after the stop of irradiation with visible light to the strength $Ib_1$ thereof measured under irradiation with visible light is smaller than 0.5, and the ratio ($Id_2/Id_1$) of the strength $Id_2$ of that main signal measured *in vacuo* at a temperature of 5 K or below immediately after the stop of irradiation with visible light to the strength $Id_1$ thereof measured under irradiation with visible light is smaller than 0.45.

**14.** A titanium oxide photocatalyst as set forth in any one of claims 7 - 13 wherein the main signal of triplet signal B of the ESR spectrum measured at a temperature of 5 K or below comprises at least four signals having g values in the ranges of 2.003 - 2.0045, 2.004 - 2.006, 2.0065 - 2.0085, and 2.009 - 2.011, respectively.

15. A titanium oxide photocatalyst as set forth in any one of claims 1 - 14 which has a specific surface area of at most 120 m$^2$/g and an amount of surface hydroxyl groups of at least 600 $\mu$eq/g as measured by the fluoride ion adsorption method.

16. A titanium oxide photocatalyst as set forth in claim 15 which has a density of surface hydroxyl groups of at least 8 $\mu$eq/m$^2$.

17. A titanium oxide photocatalyst as set forth in claim 15 or 16 wherein the amount of surface hydroxyl groups is such that the amount of terminal type hydroxyl groups (T) ($\mu$eq/g) and the amount of bridge type hydroxyl groups (B) ($\mu$eq/g) satisfy the relationship T/B $\geq$ 0.20.

18. A titanium oxide photocatalyst as set forth in any one of claims 1 - 17 wherein the titanium oxide contains oxygen defects.

19. A titanium oxide photocatalyst as set forth in claim 18 wherein the titanium oxide includes anatase crystals, rutile crystals, or both.

20. A method for preparing a titanium oxide photocatalyst as set forth in any one of claim 1 - 19 **characterized by** subjecting a raw material selected from titanium oxide and its precursors to heat treatment in an atmosphere containing a hydrolyzable compound, then bringing it into contact with water, and subjecting it to additional heat treatment at a temperature of at least 350° C.

21. A method as set forth in claim 20 wherein the raw material is titanium oxide and/or titanium hydroxide obtained by a method including neutralizing an acidic titanium compound with a nitrogen-containing base such that the pH at the completion of reaction is 7 or below.

22. A photocatalytic functional member of the type responsive to visible light **characterized by** comprising a substrate having a titanium oxide photocatalyst as set forth in any one of claims 1 - 19 adhered to the surface of the substrate.

23. A photocatalytic functional member of the type responsive to visible light **characterized by** comprising a substrate having a film containing a titanium oxide photocatalyst as set forth in any one of claims 1 - 19 and a binder component on the surface of the substrate, with the content of the photocatalyst in the film being 5 - 95 mass percent.

24. A photocatalytic functional member as set forth in claim 22 or 23 wherein the substrate primarily comprises a metal.

25. A photocatalyst dispersion **characterized by** having a titanium oxide photocatalyst as set forth in any one of claims 1 - 19 as a dispersed substance.

26. A photocatalyst coating fluid **characterized by** being prepared using a photocatalyst dispersion as set forth in claim 25.

27. A photocatalyst coating fluid **characterized by** comprising a titanium oxide photocatalyst as set forth in any one of claims 1 - 19 and a binder in a liquid medium, wherein the content of the titanium oxide photocatalyst based on the total amount of non-volatile substances is 5 - 95 mass percent.

28. A method for manufacturing a photocatalytic functional member of the type responsive to visible light **characterized by** including a step of applying a dispersion as set forth in claim 25 or a photocatalyst coating fluid as set forth in claim 26 or 27 to a substrate.

29. A method for manufacturing a photocatalytic functional member of the type responsive to visible light **characterized by** adhering a raw material selected from titanium oxide and its precursors to the surface of a heat resistant substrate, and then subjecting the substrate sequentially to heat treatment in an atmosphere containing a hydrolyzable compound, contacting treatment with water, and additional heat treatment at a temperature of at least 350° C.

30. A method for manufacturing a photocatalytic functional member of the type responsive to visible light **characterized**

**by** subjecting a raw material selected from titanium oxide and its precursors to heat treatment in an atmosphere containing a hydrolyzable compound followed by contact of the raw material with water, adhering the raw material to the surface of a heat resistant substrate, and then subjecting the substrate to heat treatment at a temperature of at least 350° C.

## Fig. 1

Triplet A

Triplet B

Before irradiation with visible light

1 min after irradiation with visible light

1 min after stop of irradiation with visible light

2.04  2.03  2.02  2.01  2  1.99  1.98  1.97
g value

## Fig. 2

Triplet A

Triplet B

Before irradiation with visible light

1 min after irradiation with visible light

1 min after stop of irradiation with visible light

2.04  2.03  2.02  2.01  2  1.99  1.98  1.97
g value

# *Fig. 3*

## INTERNATIONAL SEARCH REPORT

| International application No. |
|---|
| PCT/JP2005/007451 |

A. CLASSIFICATION OF SUBJECT MATTER
    Int.Cl$^7$ B01J35/02, B32B9/00, C09D1/00

According to International Patent Classification (IPC) or to both national classification and IPC

B. FIELDS SEARCHED

Minimum documentation searched (classification system followed by classification symbols)
    Int.Cl$^7$ B01J21/00-38/74

Documentation searched other than minimum documentation to the extent that such documents are included in the fields searched
    Jitsuyo Shinan Koho        1922-1996    Jitsuyo Shinan Toroku Koho    1996-2005
    Kokai Jitsuyo Shinan Koho   1971-2005    Toroku Jitsuyo Shinan Koho    1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-190953 A  (Sumitomo Chemical Co., Ltd.), 17 July, 2001 (17.07.01), Claims & EP 1095908 A1          & US 6830741 B1 | 1-30 |
| A | WO 2000/010706 A1  (Yugen Kaisha Kankyo Debaisu Kenkyusho), 02 March, 2000 (02.03.00), Claims & EP 1125636 A1 | 1-30 |

☐ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 July, 2005 (25.07.05) | 09 August, 2005 (09.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9262482 A
- JP H10146530 A
- WO 0010706 A
- JP 20012015103 A
- WO 03080244 A

**Non-patent literature cited in the description**

- *The Journal of the Japan Chemical Society,* 1986, vol. 8, 1084-1090
- **H. P. BOEHM.** *Angew. Chem.,* 1966, vol. 78, 617